# EUROPÄISCHE PATENTANMELDUNG

(11) **EP 2 224 296 A1**
(43) Veröffentlichungstag der Anmeldung: **01.09.2010**
(21) Anmeldenummer: 09002808.5
(22) Anmeldetag: 27.02.2009
(51) Int. Cl.: G05B 19/042, G06F 9/44

(54) **Verfahren zur Bereitstellung von Funktionen in einem Automatisierungssystem, Steuerungsprogramm und Automatisierungssystem**

(71) Anmelder: Siemens Aktiengesellschaft, 80333 München (DE)
(72) Erfinder: Brunner, Felix, 8045 Zürich (CH)

(57) **Zusammenfassung**

Zur Bereitstellung von Funktionen in einem Automatisierungssystem mit über ein Kommunikationsnetz gekoppelten Steuerungseinheiten werden Funktionen des Automatisierungssystems durch Dienste verfügbar gemacht. Komponenten eines Dienstes werden in dienstspezifische Komponenten und netzwerkprotokollspezifische Komponenten aufgeteilt. Dienstspezifische Komponenten und netzwerkprotokollspezifische Komponenten weisen eine einheitliche Konfigurationsschnittstelle auf. Dienstkomponenten werden über die einheitliche Konfigurationsschnittstelle durch eine Dienstkonfigurationseinheit zu einem Dienst verknüpft. Bei einer Verknüpfung von Dienstkomponenten zu einem Dienst wird zumindest eine Abhängigkeit von einer netzwerkprotokollspezifischen Komponente zu einer dienstspezifischen Komponente durch eine Dienstkonfigurationseinheit zugeordnet. Anhand einer Schnittstellenspezifikation einer zugeordneten dienstspezifischen Komponente wird in Abhängigkeit von einem ausgewählten Netzwerkprotokoll automatisch eine netzwerkprotokollspezifische Komponente generiert.

## Beschreibung

Verfahren zur Bereitstellung von Funktionen in einem Automatisierungssystem, Steuerungsprogramm und Automatisierungssystem

Industrielle Automatisierungssysteme dienen zur Überwachung, Steuerung und Regelung von technischen Prozessen, insbesondere im Bereich Fertigungs-, Prozeß- und Gebäudeautomatisierung, und ermöglichen einen Betrieb von Steuerungseinrichtungen, Sensoren, Maschinen und industriellen Anlagen, der möglichst selbständig und unabhängig von menschlichen Eingriffen erfolgen soll. Aufgrund einer ständig steigenden Bedeutung von Informationstechnik für Automatisierungssysteme, die zahlreiche vernetzte Rechnereinheiten umfassen, gewinnen Verfahren zur zuverlässigen Bereitstellung von über ein Automatisierungssystem verteilten Funktionen für eine Bereitstellung von Überwachungs-, Steuerungs- und Regelungsfunktionen verstärkt an Bedeutung.

Bei verteilten Diensten, deren Dienstkomponenten durch mehrere unterschiedliche Rechnereinheiten zur Realisierung von Funktionen eines Automatisierungssystems bereitgestellt werden, bestehen hohe Anforderungen an eine Kommunikationsinfrastruktur des Automatisierungssystems. Zum einen sind üblicherweise Anforderungen nach einer echtzeitfähigen Kommunikation, die durch eine vergleichsweise hohe Zahl relativ kurzer Meldungen gekennzeichnet ist, zu erfüllen, andererseits sollen unterschiedliche Kommunikationsprotokolle für verteilte Dienste möglichst transparent nutzbar sein. Eine leistungsschwache Kommunikationsinfrastruktur kann eine fehlerfreie Bereitstellung eines Dienstes gefährden und sich nachteilig auf Systemstabilität und -verfügbarkeit auswirken. Entsprechend bisherigen Ansätzen wird ein spezifischer Kommunikationsadapter vorgesehen, der einer individuellen Dienststeuerungseinheit zugeordnet und an diese angepaßt ist. Bei Änderungen von Komponenten eines durch die Dienststeuerungseinheit verwalteten Dienstes sind daher häufig weitreichende Anpassungsarbeiten am Kommunikationsadapter erforderlich.

Der vorliegenden Erfindung liegt die Aufgabe zugrunde, ein zuverlässiges und effizientes Verfahren zur Bereitstellung von Funktionen in einem Automatisierungssystem mit über ein Kommunikationsnetz gekoppelten Steuerungseinheiten zu schaffen sowie geeignete Vorrichtungen oder Mittel zur Durchführung des Verfahrens anzugeben.

Erfindungsgemäß wird diese Aufgabe durch ein Verfahren mit den in Anspruch 1 angegebenen Merkmalen, ein Steuerungsprogramm mit den in Anspruch 16 angegebenen Merkmalen und ein Automatisierungssystem mit den in Anspruch 17 angegebenen Merkmalen gelöst. Vorteilhafte Weiterbildungen der vorliegenden Erfindung sind in den abhängigen Ansprüchen angegeben.

Ein wesentlicher Aspekt des erfindungsgemäßen Verfahrens liegt darin, daß zur Bereitstellung von Funktionen in einem Automatisierungssystem mit über ein Kommunikationsnetz gekoppelten Steuerungseinheiten Funktionen des Automatisierungssystems durch Dienste verfügbar gemacht werden, und daß Komponenten eines Dienstes in dienstspezifische Komponenten und netzwerkprotokollspezifische Komponenten aufgeteilt werden. Außerdem weisen dienstspezifische Komponenten und netzwerkprotokollspezifische Komponenten eine einheitliche Konfigurationsschnittstelle auf. Über die einheitliche Konfigurationsschnittstelle werden Dienstkomponenten durch eine Dienstkonfigurationseinheit zu einem Dienst verknüpft. Bei einer verknüpfung von Dienstkomponenten zu einem Dienst wird zumindest eine Abhängigkeit von einer netzwerkprotokollspezifischen Komponente zu einer dienstspezifischen Komponente durch eine Dienstkonfigurationseinheit zugeordnet. Anhand einer Schnittstellenspezifikation einer zugeordneten dienstspezifischen Komponente wird eine netzwerkprotokollspezifische Komponente in Abhängigkeit von einem ausgewählten Netzwerkprotokoll automatisch generiert. Auf diese Weise ergibt sich eine besonders effiziente und wenig fehleranfällige Bereitstellung einer Kommunikationsschnittstelle eines Dienstes zu einem vom Automatisierungssystem umfaßten Kommunikationsnetz.

Des weiteren bietet das erfindungsgemäße Verfahren den Vorteil, daß dienstspezifischen Komponenten und netzwerkprotokollspezifischen Komponenten voneinander entkoppelt sind. Änderungen an einer dienstspezifischen Komponente erfordern daher nicht zwangsläufig Änderungen an einer zugehörigen netzwerkprotokollspezifischen Komponente. Grundsätzlich sind keine Änderungen an netzwerkprotokollspezifischen Komponenten notwendig, sofern Schnittstellenspezifikationen von dienstspezifischen Komponenten nicht verändert werden. Entsprechend einer bevorzugten Ausführungsform der vorliegenden Erfindung weisen dienstspezifische Komponenten einheitliche Kommunikationsschnittstellen zu abhängigen netzwerkprotokollspezifischen Komponenten auf. Außerdem werden dienstspezifische Komponenten vorzugsweise ausschließlich über abhängige netzwerkprotokollspezifische Komponenten mit ausgewählten Kommunikationsnetzen verbunden.

Entsprechend einer vorteilhaften Weiterbildung der vorliegenden Erfindung wird eine netzwerkprotokollspezifische Komponente zur Zuordnung zu einer dienstspezifischen Komponente durch eine Dienstkonfigurationseinheit geladen und mittels Dependency Injection mit einer zugeordneten dienstspezifischen Komponente verknüpft. Dependency Injection ist ein Lösungsansatz für objektorientierte Systeme und zielt darauf ab, Abhängigkeiten zwischen Komponenten oder Objekten zu verringern. Mittels Dependency Injection kann außerdem für eine netzwerkprotokollspezifische Komponente eine einheitliche Kommunikationsschnittstelle einer zugeordneten dienstspezifischen Komponente verfügbar gemacht werden.

In konventionellen objektorientierten Systemen ist jedes Objekt bisher selbst dafür zuständig, benötigte abhängige Objekte und Ressourcen zu erzeugen und zu verwalten. Hierzu benötigen Objekte in konventionellen objektorientierten Systemen Kenntnisse ihrer Umgebung. Insbesondere sind in konventionellen objektorientierten Systemen Kenntnisse über eine konkrete Implementierung abhängiger Objekte und Ressourcen wichtig. Im Unterschied zu konventionellen objektorientierten Systemen erfolgt durch Dependency Injection eine Übertragung von Verantwortung für ein Erzeugen und Verknüpfung von Objekten an ein extern konfigurierbares Programmier-Rahmenwerk (Framework) entsprechend einem Komponentenmodell. Hierdurch wird Code eines Objektes unabhängig von seiner Umgebung sowie benötigten abhängigen Objekten und Ressourcen. Dies erleichtert einerseits eine Auflösung von Abhängigkeiten beim Kompilieren, und andererseits kann Programmlogik in Konfigurationsdateien ausgelagert werden.

Vorzugsweise wird pro unterstütztem Netzwerkprotokoll eine separate mit einer dienstspezifischen Komponente verknüpfbare netzwerkprotokollspezifische Komponente bereitgestellt. Eine Auswahl von Kommunikationsfunktionen kann damit durch eine einfache Verknüpfung mit einer entsprechenden netzwerkprotokollspezifischen Komponente erfolgen.

Dienste des Automatisierungssystems werden bevorzugt innerhalb einer dienstorientierten Architektur durch die Rechnereinheiten bereitgestellt. Dienstorientierte bzw. serviceorientierte Architekturen (SOA) zielen darauf ab, Dienste in komplexen Organisationseinheiten zu strukturieren und für eine Vielzahl von Nutzern verfügbar zu machen. Dabei werden beispielsweise vorhandene Komponenten eines Datenverarbeitungssystems, wie Programme, Datenbanken, Server oder Websites, so koordiniert, daß von den Komponenten bereitgestellte Leistungen zu Diensten zusammen gefaßt und berechtigten Nutzern zur Verfügung gestellt werden. Serviceorientierte Architekturen ermöglichen eine Anwendungsintegration, indem Komplexität einzelner Teilkomponenten eines Datenverarbeitungssystems hinter standardisierten Schnittstellen verborgen wird. Hieraus resultiert eine besonders sichere und flexible Bereitstellung von Funktionen in einem industriellen Automatisierungssystem.

Entsprechend einer vorteilhaften Weiterbildung der vorliegenden Erfindung unterstützen netzwerkprotokollspezifische Dienstkomponenten ein als Simple Object Access Protocol (SOAP) bekanntes Netzwerkprotokoll. SOAP ermöglicht einen Datenaustausch zwischen schwach gekoppelten Systemen und eine Durchführung von Remote Procedure Calls. Dabei greift SOAP auf andere Standards zurück. Zur Repräsentation von Daten wird XML verwendet, und eine Übertragung von Nachrichten erfolgt mittels Internet-Protokollen der Transport- und Anwendungsschicht entsprechend dem TCP/IP-Referenzmodell. SOAP bietet im Anwendungsgebiet der vorliegenden Erfindung den Vorteil einer Übertragbarkeit beliebiger applikationsspezifische Informationen.

Das erfindungsgemäße Verfahren kann durch ein Steuerungsprogramm zur Bereitstellung von Funktionen in einem Automatisierungssystem implementiert werden. Das Steuerungsprogramm ist in einen Arbeitsspeicher einer Rechnereinheit ladbar und weist zumindest einen Codeabschnitt auf, bei dessen Ausführung eine Durchführung vorangehend beschriebener Schritte des erfindungsgemäßen Verfahrens veranlaßt wird, wenn das Steuerungsprogramm in der Rechnereinheit abläuft.

Das erfindungsgemäße industrielle Automatisierungssystem umfaßt mehrere über ein Kommunikationsnetz miteinander verbundenen Steuerungseinheiten zur Bereitstellung von Funktionen des Automatisierungssystems als Dienste, deren Komponenten in dienstspezifische Komponenten und netzwerkprotokollspezifische Komponenten aufgeteilt sind. Dabei weisen dienstspezifische Komponenten und netzwerkprotokollspezifische Komponenten eine einheitliche Konfigurationsschnittstelle auf. Außerdem ist zumindest eine Dienstkonfigurationseinheit zur Verknüpfung von Dienstkomponenten zu einem Dienst über die einheitliche Konfigurationsschnittstelle vorgesehen. Darüber hinaus umfaßt das Automatisierungssystem eine Steuerungseinheit zur Zuordnung zumindest einer Abhängigkeit von einer netzwerkprotokollspezifischen Komponente zu einer dienstspezifischen Komponente durch eine Dienstkonfigurationseinheit bei einer Verknüpfung von Dienstkomponenten zu einem Dienst. Des weiteren ist eine Steuerungseinheit zur automatischen Generierung einer netzwerkprotokollspezifischen Komponente anhand einer Schnittstellenspezifikation einer zugeordneten dienstspezifischen Komponente in Abhängigkeit von einem ausgewählten Netzwerkprotokoll vorgesehen.

Die vorliegende Erfindung wird nachfolgend an einem Ausführungsbeispiel anhand der Zeichnung näher erläutert. Es zeigt
- Figur 1: eine schematische Darstellung eines Automatisie- rungssystems mit mehreren über ein Kommunikations- netz miteinander verbundenen Rechnereinheiten,
- Figur 2: ein Diagramm zu einem Austausch von Meldungen für eine Verknüpfung von Dienstkomponenten zu einem Dienst und zur Registrierung des Dienstes.

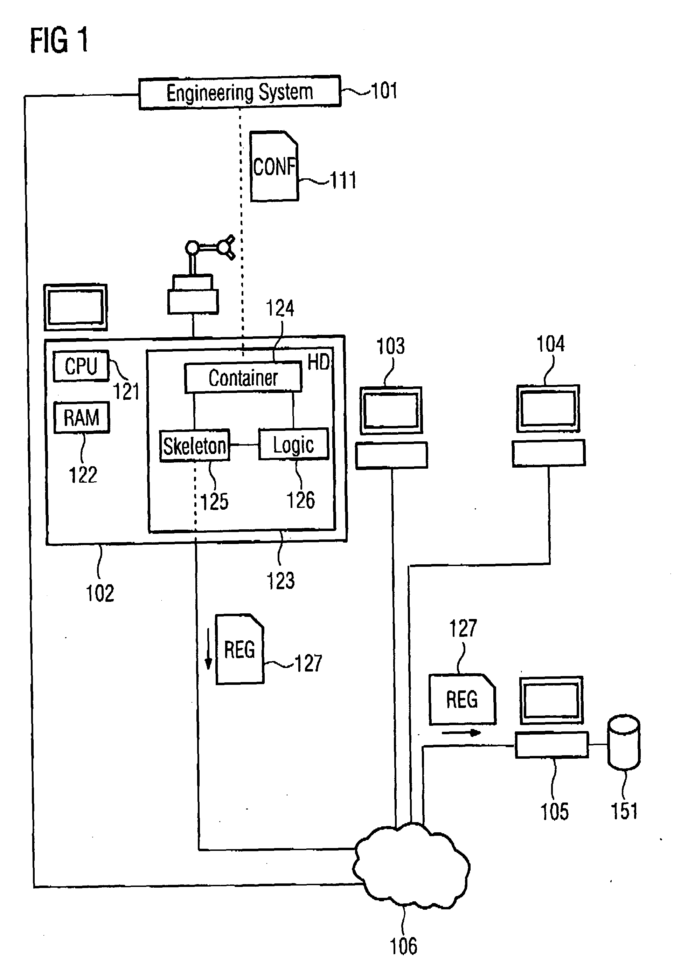

Das in der Figur dargestellte Automatisierungssystem umfaßt ein Engineering-System 101 und mehrere Rechnereinheiten 102-105, die als Netzknoten über ein Kommunikationsnetz 106 miteinander verbunden sind. Dabei sind die Rechnereinheiten 102-105 über ein in Figur 1 nicht explizit dargestelltes Messaging Gateway an das Kommunikationsnetz 106 angekoppelt. Die Rechnereinheiten 102-105 stellen Funktionen des Automatisierungssystems als lokale Dienste bereit, die mittels System- und Dienstkonfigurationsdaten 111 konfiguriert und aktiviert werden. System- und Dienstkonfigurationsdaten 111 werden beispielsweise durch das Engineering-System 101 an die Rechnereinheiten 102-105 bereitgestellt. Darüber hinaus dient das Engineering-System 101 dient zur Konfiguration, Wartung, Inbetriebnahme und Dokumentation des Automatisierungssystems. Bei dem Automatisierungssystem kann es sich um ein Fertigungs-, Prozeß- oder Gebäudeautomatisierungssystem handeln.

Eine erste Rechnereinheit 102 umfaßt zumindest einen Prozessor 121, einen Arbeitsspeicher 122 und eine Festplatte 123 zur nichtflüchtigen Speicherung von Programmcode, Anwendungsdaten und Benutzerdaten. Auf der Festplatte 123 der ersten Rechnereinheit 102 ist Programmcode zur Bereitstellung eines lokalen Dienstes gespeichert. Der lokale Dienst dient im vorliegenden Ausführungsbeispiel beispielsweise zur Ansteuerung meßtechnischer oder aktorischer Peripherie, wie Sensoren oder Roboter. Der auf der Festplatte 123 gespeicherte Programmcode ist in den Arbeitsspeicher 122 der ersten Rechnereinheit 102 ladbar und durch den Prozessor 121 zur Bereitstellung des lokalen Dienstes ausführbar. Der Code zur Bereitstellung des lokalen Dienstes umfaßt Code 124 zur Implementierung einer Dienstkonfigurationseinheit sowie Code 125, 126 zur Realisierung einer dienstspezifischen Komponente bzw. einer netzwerkprotokollspezifischen Komponente, in welche der lokale Dienst aufgeteilt ist.

Dienstspezifische Komponenten und netzwerkprotokollspezifische Komponenten weisen eine einheitliche Konfigurationsschnittstelle auf. Über die einheitliche Konfigurationsschnittstelle werden obige Dienstkomponenten durch die Dienstkonfigurationseinheit zum lokalen Dienst verknüpft, der durch die erste Rechnereinheit 102 bereitgestellt wird. Bei einer Verknüpfung obiger Dienstkomponenten zum lokalen Dienst wird eine Abhängigkeit von der netzwerkprotokollspezifischen Komponente zur dienstspezifischen Komponente durch die Dienstkonfigurationseinheit zugeordnet. Dabei wird die netzwerkprotokollspezifische Komponente durch die Dienstkonfigurationseinheit geladen und mittels Dependency Injection mit der dienstspezifischen Komponente des durch die erste Rechnereinheit 102 bereitgestellten lokalen Dienstes verknüpft. Mittels Dependency Injection wird für die netzwerkprotokollspezifische Komponente außerdem eine einheitliche Kommunikationsschnittstelle der dienstspezifischen Komponente verfügbar gemacht. Die netzwerkprotokollspezifische Komponente wird anhand einer Schnittstellenspezifikation der dienstspezifischen Komponente in Abhängigkeit von einem ausgewählten Netzwerkprotokoll automatisch generiert. Sowohl die dienstspezifische Komponente als auch die netzwerkprotokollspezifische Komponente werden im vorliegenden Ausführungsbeispiel durch die Dienstkonfigurationseinheit während ihres gesamten Lebenszyklus von ihrer Erzeugung bis zu ihrer Terminierung gesteuert.

Bei einer erfolgreichen Aktivierung der netzwerkprotokollspezifischen Komponente erfolgt eine Anmeldung des lokalen Dienstes am Kommunikationsnetz 106 sowie eine Registrierung des lokalen Dienstes durch Speicherung eines Dienstidentifikators in einer Registrierungsdatenbank 151, die einer zweiten Rechnereinheit 105 zugeordnet ist. Zur Registrierung des lokalen Dienstes in der Registrierungsdatendank 151 übermittelt die erste Rechnereinheit 102 eine Meldung 127 mit dem Dienstidentifikator und dem lokalen Dienst zugeordneten Dienstzugriffs- bzw. Dienstadreßinformationen an die zweite Rechnereinheit 105.

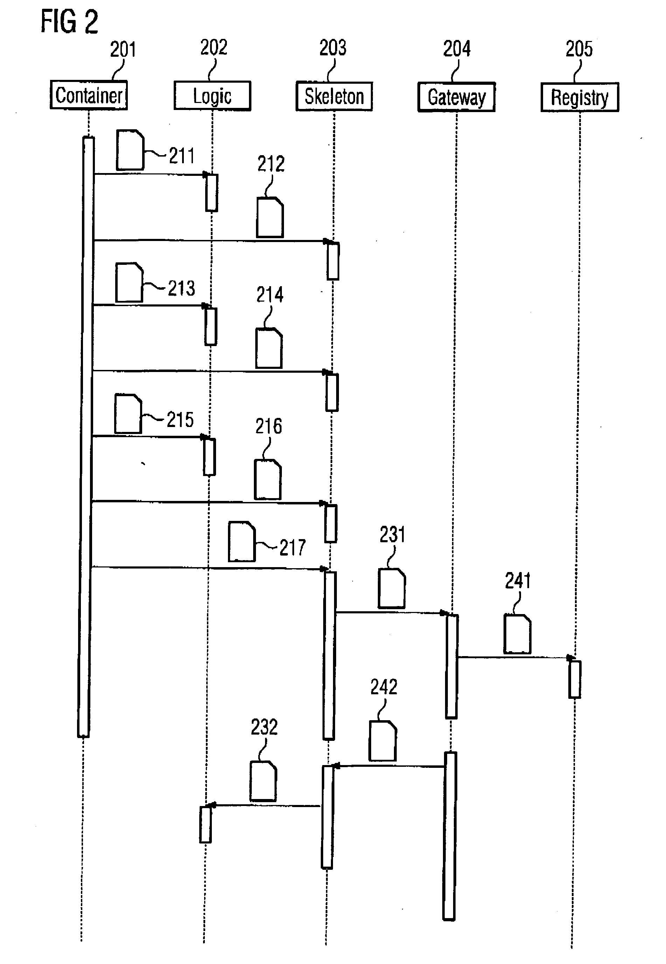

Entsprechend dem in Figur 2 dargestellten Diagramm übermittelt die Dienstkonfigurationseinheit 201 für eine Verknüpfung von Dienstkomponenten zum lokalen Dienst und zur Registrierung des lokalen Dienstes zunächst eine Meldung 211 an die dienstspezifische Komponente 202. Diese Meldung 211 umfaßt Konfigurationsdaten für die dienstspezifische Komponente 202 und eine Anweisung, die übermittelten Konfigurationsdaten für die dienstspezifische Komponente 202 zu verwenden. In entsprechender Weise übermittelt die Dienstkonfigurationseinheit 201 eine Konfigurationsdaten umfassende Meldung 212 auch an die netzwerkprotokollspezifische Komponente 203. Die Konfigurationsdaten werden durch die Dienstkonfigurationseinheit 201 über die einheitliche Konfigurationsschnittstelle zur dienstspezifischen Komponente 202 und zur netzwerkprotokollspezifischen Komponente 203 übermittelt.

Anschließend übermittelt die Dienstkonfigurationseinheit 201 jeweils eine Meldung 213, 214 an die dienstspezifische Komponente 202 und an die netzwerkprotokollspezifische Komponente 203 zu deren Initialisierung auf Basis der zuvor übermittelten Konfigurationsdaten. Bei der Initialisierung werden die Konfigurationsdaten für die dienstspezifische Komponente 202 und die netzwerkprotokollspezifische Komponente 203 geladen. Nach erfolgreicher Initialisierung übermittelt die Dienstkonfigurationseinheit 201 eine Meldung 215 an die dienstspezifische Komponente 202 zu deren Aktivierung auf Basis der bei der Initialisierung geladenen Konfigurationsdaten. Wenn die dienstspezifische Komponente 202 korrekt aktiviert worden ist, übermittelt die Dienstkonfigurationseinheit 201 eine Meldung 216 an die netzwerkprotokollspezifische Komponente 203 zur Zuordnung einer Abhängigkeit von der netzwerkprotokollspezifischen Komponente 203 zur dienstspezifischen Komponente 202 mittels Dependency Injection.

Bei erfolgreicher Zuordnung der Abhängigkeit von der netzwerkprotokollspezifischen Komponente 203 zur dienstspezifischen Komponente 202 übermittelt die Dienstkonfigurationseinheit 201 eine Meldung 217 an die netzwerkprotokollspezifischen Komponente 203 zu deren Aktivierung. Im vorliegenden Ausführungsbeispiel erfolgt zur Aktivierung der netzwerkprotokollspezifischen Komponente 203 ein Aufruf der dienstspezifischen Komponente 202 durch die netzwerkprotokollspezifischen Komponente 203. Nach Aktivierung der netzwerkprotokollspezifischen Komponente 203 übermittelt diese eine Meldung 231 an das Messaging Gateway 204 zur Anmeldung des lokalen Dienstes am Kommunikationsnetz.

Ist die Anmeldung des lokalen Dienstes am Kommunikationsnetz erfolgreich verlaufen, übermittelt das Messaging Gateway 204 eine Meldung 241 an die Registrierungsdatenbank 205 zur Registrierung des lokalen Dienstes. Der lokale Dienst kann nach erfolgreicher Registrierung durch eine über das Messaging Gateway 204 an die netzwerkprotokollspezifische Komponente 203 weitergeleitete Meldung 242 aufgerufen werden. Hierzu übermittelt die netzwerkprotokollspezifische Komponente 203 eine Meldung 232 zum Dienstaufruf an die dienstspezifische Komponente 202.

Im vorliegenden Ausführungsbeispiel umfaßt die Dienstkonfigurationseinheit 201 funktional eine Steuerungseinheit zur Zuordnung zumindest einer Abhängigkeit von einer netzwerkprotokollspezifischen Komponente zu einer dienstspezifischen Komponente bei einer Verknüpfung von Dienstkomponenten zu einem Dienst. Außerdem weist die Dienstkonfigurationseinheit 201 Funktionen einer Steuerungseinheit zur automatischen Generierung einer netzwerkprotokollspezifischen Komponente anhand einer Schnittstellenspezifikation einer zugeordneten dienstspezifischen Komponente in Abhängigkeit von einem ausgewählten Netzwerkprotokoll auf.

Die Anwendung der vorliegenden Erfindung ist nicht auf das beschriebene Ausführungsbeispiel beschränkt.

## Patentansprüche

1. Verfahren zur Bereitstellung von Funktionen in einem Automatisierungssystem mit über ein Kommunikationsnetz gekoppelten Steuerungseinheiten, bei dem
- Funktionen des Automatisierungssystems durch Dienste verfügbar gemacht werden,
- Komponenten eines Dienstes in dienstspezifische Komponenten und netzwerkprotokollspezifische Komponenten aufgeteilt werden,
- dienstspezifische Komponenten und netzwerkprotokollspezifische Komponenten eine einheitliche Konfigurationsschnittstelle aufweisen,
- Dienstkomponenten über die einheitliche Konfigurationsschnittstelle durch eine Dienstkonfigurationseinheit zu einem Dienst verknüpft werden,
- bei einer Verknüpfung von Dienstkomponenten zu einem Dienst zumindest eine Abhängigkeit von einer netzwerkprotokollspezifischen Komponente zu einer dienstspezifischen Komponente durch eine Dienstkonfigurationseinheit zugeordnet wird,
- eine netzwerkprotokollspezifische Komponente anhand einer Schnittstellenspezifikation einer zugeordneten dienstspezifischen Komponente in Abhängigkeit von einem ausgewählten Netzwerkprotokoll automatisch generiert wird.

2. Verfahren nach Anspruch 1,
bei dem dienstspezifische Komponenten einheitliche Kommunikationsschnittstellen zu abhängigen netzwerkprotokollspezifischen Komponenten aufweisen.

3. Verfahren nach Anspruch 2,
bei dem dienstspezifische Komponenten über abhängige netzwerkprotokollspezifische Komponenten mit ausgewählten Kommunikationsnetzen verbunden werden.

4. Verfahren nach einem der Ansprüche 1 bis 3,
bei dem eine netzwerkprotokollspezifische Komponente zur Zuordnung zu einer dienstspezifischen Komponente durch eine Dienstkonfigurationseinheit geladen wird und mittels Dependency Injection mit einer zugeordneten dienstspezifischen Komponente verknüpft wird.

5. Verfahren nach Anspruch 4,
bei dem für die netzwerkprotokollspezifische Komponente eine einheitliche Kommunikationsschnittstelle der dienstspezifischen Komponente mittels Dependency Injection verfügbar gemacht wird.

6. Verfahren nach einem der Ansprüche 4 oder 5,
bei dem bei einer Aktivierung einer netzwerkprotokollspezifischen Komponente eine Anmeldung eines die netzwerkprotokollspezifische Komponente umfassenden Dienstes am Kommunikationsnetz durch eine Dienstkonfigurationseinheit erfolgt.

7. Verfahren nach einem der Ansprüche 4 bis 6,
bei dem bei einer Aktivierung einer netzwerkprotokollspezifischen Komponente eine Registrierung eines die netzwerkprotokollspezifische Komponente umfassenden Dienstes durch Speicherung eines Dienstidentifikators in einer Registrierungsdatenbank erfolgt.

8. Verfahren nach Anspruch 7,
bei dem in der Registrierungsdatenbank einem Dienstidentifikator zugeordnete Dienstzugriffs- und/oder Dienstadreßinformationen gespeichert sind.

9. Verfahren nach einem der Ansprüche 1 bis 7,
bei dem pro unterstütztem Netzwerkprotokoll eine separate mit einer dienstspezifischen Komponente verknüpfbare netzwerkprotokollspezifische Komponente bereitgestellt wird.

10. Verfahren nach einem der Ansprüche 1 bis 9,
bei dem Konfigurationsdaten durch eine Dienstkonfigurationseinheit über eine Konfigurationsschnittstelle zu einer dienstspezifischen und/oder netzwerkprotokollspezifischen Komponente übermittelt werden, und bei dem eine Initialisierung einer dienstspezifischen und/oder netzwerkprotokollspezifischen Komponente durch Laden der übermittelten Konfigurationsdaten bei Start der dienstspezifischen und/oder netzwerkprotokollspezifischen Komponente erfolgt.

11. Verfahren nach Anspruch 10,
bei dem zuerst eine Aktivierung einer dienstspezifischen Komponente und dann eine Aktivierung einer abhängigen netzwerkprotokollspezifischen Komponente bei einem Aufruf der dienstspezifischen Komponente durch die netzwerkprotokollspezifische Komponente erfolgt.

12. Verfahren nach einem der Ansprüche 10 oder 11,
bei dem Konfigurationsdaten durch ein Engineering-System zur Konfiguration, Wartung, Inbetriebnahme und/oder Dokumentation des Automatisierungssystems für eine Dienstkonfigurationseinheit verfügbar gemacht werden. '

13. Verfahren nach einem der Ansprüche 1 bis 12,
bei dem Dienste des Automatisierungssystems innerhalb einer dienstorientierten Architektur bereitgestellt werden.

14. Verfahren nach einem der Ansprüche 1 bis 13,
bei dem netzwerkprotokollspezifische Komponenten von Diensten des Automatisierungssystems ein als Simple Object Access Protocol bekanntes Netzwerkprotokoll unterstützen.

15. Verfahren nach einem der Ansprüche 1 bis 14,
bei dem das Automatisierungssystem ist ein Fertigungs-, Prozeß- oder Gebäudeautomatisierungssystem ist.

16. Steuerungsprogramm zur Bereitstellung von Funktionen in einem Automatisierungssystem, das in einen Arbeitsspeicher einer Rechnereinheit ladbar ist und zumindest einen Codeabschnitt aufweist, bei dessen Ausführung
- eine Verknüpfung von Dienstkomponenten zu einem Dienst über eine einheitliche Konfigurationsschnittstelle durch eine Dienstkonfigurationseinheit veranlaßt wird, wobei Funktionen des Automatisierungssystems durch Dienste verfügbar gemacht werden, Komponenten eines Dienstes in dienstspezifische Komponenten und netzwerkprotokollepezifische Komponenten aufgeteilt sind und dienstspezifische Komponenten und netzwerkprotokollspezifische Komponenten eine einheitliche Konfigurationsschnittstelle aufweisen,
- bei einer Verknüpfung von Dienstkomponenten zu einem Dienst eine Zuordnung zumindest einer Abhängigkeit von einer netzwerkprotokollspezifischen Komponente zu einer dienstspezifischen Komponente durch eine Dienstkonfigurationseinheit veranlaßt wird,
- eine automatische Generierung einer netzwerkprotokollspezifischen Komponente anhand einer Schnittstellenspezifikation einer zugeordneten dienstspezifischen Komponente in Abhängigkeit von einem ausgewählten Netzwerkprotokoll veranlaßt wird.

17. Automatisierungssystem mit
- mehreren über ein Kommunikationsnetz miteinander verbundenen Steuerungseinheiten zur Bereitstellung von Funktionen des Automatisierungssystems als Dienste, deren Komponenten in dienstspezifische Komponenten und netzwerkprotokollspezifische Komponenten aufgeteilt sind, wobei dienstspezifische Komponenten und netzwerkprotokollspezifische Komponenten eine einheitliche Konfigurationsschnittstelle aufweisen,
- zumindest einer Dienstkonfigurationseinheit zur Verknüpfung von Dienstkomponenten zu einem Dienst über die einheitliche Konfigurationsschnittstelle,
- einer Steuerungseinheit zur Zuordnung zumindest einer Abhängigkeit von einer netzwerkprotokollspezifischen Komponente zu einer dienstspezifischen Komponente durch eine Dienstkonfigurationseinheit bei einer Verknüpfung von Dienstkomponenten zu einem Dienst,
- einer Steuerungseinheit zur automatischen Generierung einer netzwerkprotokollspezifischen Komponente anhand einer Schnittstellenspezifikation einer zugeordneten dienstspezifischen Komponente in Abhängigkeit von einem ausgewählten Netzwerkprotokoll.
